Europäisches Patentamt

European Patent Office

Office européen des brevets

(19)

(11) EP 0 704 700 B1

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(51) Int Cl.6: **G01N 29/04**

(21) Anmeldenummer: **95112909.7**

(22) Anmeldetag: **17.08.1995**

(54) **Ultraschallwandler zur Prüfung von Eisenbahnrädern**

Ultrasonic transducer for testing railway wheels

Transducteur d'essai ultrasonore des roues de chemin de fer

(84) Benannte Vertragsstaaten:
**DE DK ES FR GB IT**

(30) Priorität: **01.10.1994 DE 9415885 U**

(43) Veröffentlichungstag der Anmeldung:
**03.04.1996 Patentblatt 1996/14**

(73) Patentinhaber: **Hegenscheidt-MFD GmbH
41812 Erkelenz (DE)**

(72) Erfinder: **Schneider, Friedhelm, Dr.
D-41844 Wegberg (DE)**

(74) Vertreter: **Castell, Klaus, Dr.-Ing.
Patentanwaltskanzlei
Liermann - Castell
Gutenbergstrasse 12
52349 Düren (DE)**

(56) Entgegenhaltungen:
**DE-A- 3 218 453          DE-A- 3 943 226
DE-C- 3 834 828          US-A- 3 812 708**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Ultraschallwandler und ein Verfahren zur Prüfung von Eisenbahnrädern auf Risse und dgl. mit mindestens einer Sendeeinrichtung zur impulsweisen Aussendung von Ultraschallsignalen und mindestens einer Empfangseinrichtung zum Empfang der zugeordneten Echosignale, wobei die Übertragung der Ultraschallsignale auf das zu prüfende Eisenbahnrad und die Rückübertragung vom Eisenbahnrad auf die Empfangseinrichtung berührungslos oder berührend erfolgt.

Ultraschallwandler der eingangs beschriebenen Art sind bekannt und werden zur wirtschaftlichen Überprüfung von Eisenbahnrädern im eingebauten Zustand verwendet, wobei der Zug langsam über eine Teststrecke fährt, die mit derartigen Ultraschallwandlern versehen ist. Eine derartige Anordnung ist beispielsweise aus der US-A-3,812,708 bekannt.

Neben solchen Ausführungen derartiger Ultraschallwandler, bei denen die Ultraschallsignale mit Piezoelementen erzeugt und über ein Fluid auf den Radsatz übertragen werden, woraus der gravierende Nachteil einer häufigen Zerstörung der das Koppelfluid enthaltenen Blase resultiert, gibt es auch Ultraschallwandler, bei denen die Ultraschallschwingungen berührungslos auf das Eisenbahnrad übertragen werden.

Die letztgenannten Ultraschallwandler basieren meist auf einem elektrodynamischen Verfahren, bei dem bei der Erzeugung des Ultraschallimpulses im Eisenbahnrad immer zwei Impulspakete entstehen, die in gegenläufigen Richtungen um das Rad herumlaufen. Da beide Impulspakete dieselbe Zeit für einen Umlauf um das Rad benötigen (beide Impulse legen exakt dieselbe Wegstrecke mit der Länge des Radumfangs zurück), treffen sich beide Pakete (der rechtsläufige und der linksläufige Impuls) an genau dem Ort, an dem die Ultraschallwellen erzeugt wurden. Bei diesen Ultraschallwandlern werden die Ultraschallimpulse mittels einer Sendeeinrichtung erzeugt, die in einem Prüfkopf angeordnet ist, und mittels einer Empfangseinrichtung werden die zugeordneten Echosignale aufgenommen, wobei diese Empfangseinrichtung unmittelbar neben der Sendeeinrichtung angeordnet oder in diese integriert ist. Aufgrund der in gegenläufige Richtungen umlaufenden beiden Impulspakete kommt es nun in einem Bereich um den Ort der Impulserzeugung, d. h. die Sendeeinrichtung, herum zu einer Überlagerung der beiden Impulspakete. Abhängig von dem Verhältnis des Umfangs des Rades und der Wellenlänge der eingeleiteten Ultraschallschwingungen kann es sein, daß sich beide Impulspakete, bei denen es sich um Abschnitte von Wellenzügen handelt, derart überlagern, daß Wellenberg auf Wellenberg trifft, so daß es dort zu einer Verdoppelung der Amplitude kommt. Es kann jedoch auch sein, daß immer ein Wellenberg auf ein Wellental trifft, so daß es zu einer örtlichen Auslöschung der sich überlagernden Impulspakete kommt. Ebenso sind alle Zwischenformen möglich. Daraus resultiert jedoch der gravierende Nachteil, daß die Empfangseinrichtung das Umlaufsignal in Abhängigkeit vom Durchmesser und der Wellenlänge der Ultraschallschwingungen unterschiedlich stark empfängt. Da jedoch die Amplitude der empfangenen Echosignale als Bezugsgröße für die Beantwortung der Frage, ob Risse im Eisenbahnrad vorliegen, herangezogen wird, ist die Bewertung der Echosignale mit großen Unsicherheiten behaftet, da der Abstand zwischen dem zu messenden Signal und dem Störsignal infolge der Überlagerung sehr gering ist. Dadurch kommt es zu einer Vielzahl von fehlerhaften Ergebnissen bei der Untersuchung von Radsätzen auf Risse mittels der Ultraschallwandler nach dem StdT. Hierdurch werden wiederum unnötig hohe Kosten im Fall eines Ausbaus eines eigentlich fehlerfreien Radsatzes verursacht bzw. es besteht die Gefahr, daß nicht erkannte Risse zu ernsthaften Betriebsstörungen während des Fahrbetriebs der Eisenbahnfahrzeuge führen.

Diesem Nachteil versucht die DE-A1-39 43 226 bei der Ermittlung von Ungänzen in Rohren dadurch zu begegnen, daß bei der Anordnung nach dieser Druckschrift eine Wellenlänge ausgewählt wird, die genau an der Empfangseinrichtung für ungestört laufende Wellenimpulse destruktiv interferiert. Hierzu müssen jedoch Sende- und Empfangseinrichtungen exakt positioniert und die Wellenlänge in Abhängigkeit von dem Rohrdurchmesser exakt gewählt werden.

Der Erfindung liegt somit die Aufgabe zugrunde, das Erkennen von Rissen mittels solcher Ultraschallwandler zu verbessern und die Diagnose sicherer zu gestalten.

Erfindungsgemäß ist diese Aufgabe dadurch gelöst, daß bei einem gattungsgemäßen Ultraschallwandler die Sendeeinrichtung und jede der Empfangseinrichtungen um einen Abstand voneinander entfernt angeordnet sind, wobei der Abstand zwischen der Mittellinie der Sendeeinrichtung und der Mittellinie jeder Empfangseinrichtung größer

$$b + b'/2$$

ist, worin bedeuten:

b:     Breite der Sendeeinrichtung
b':    Breite der Empfangseinrichtung.

Darüber hinaus wird die Aufgabe erfindungsgemäß dadurch gelöst, daß bei einem gattungsgemäßen Verfahren die Sendeeinrichtung und jede der Empfangseinrichtungen soweit in Umfangseinrichtung des Eisenbahnrades voneinander entfernt angeordnet sind, daß jede Empfangseinrichtung außerhalb eines zur Mittellinie der Sendeeinrichtung symmetrischen Bereiches der Überlagerung entgegengesetzt umlaufender Impulspakete der Ultraschallsignale liegt.

Hierdurch wird erreicht, daß die Empfangseinrichtung nicht mehr in den Bereich der Überlagerung des linkslaufenden und des rechtslaufenden Impulses fällt und somit der unerwünschte Empfang von Störsignalen in Form der überlagerten Impulspakte ausgeschlossen wird. Die Empfangseinrichtung empfängt folglich zeitlich versetzt zunächst das in die eine Richtung umlaufende Impulspaket und sodann das in die entgegengesetzte Richtung umlaufende Impulspaket. Die Form des empfangenen Umlaufsignals steht nunmehr in direkter Beziehung zu evtl. vorliegenden Rissen im Eisenbahnradsatz und kann daher als zuverlässige Bewertungsgröße für die diesbezügliche Qualität des gerade geprüften Radsatzes herangezogen werden, ohne daß sich irgendwelche, durch Überlagerung hervorgerufenen Störungen auf die Zuverlässigkeit der Analyse auswirken könnten.

Nach einer besonders vorteilhaften Ausgestaltung der Erfindung wird vorgeschlagen, daß der Abstand A zwischen der Mittellinie der Sendeeinrichtung und der Mittellinie der Empfangseinrichtung ungefähr

$$A = b + 1/2 \cdot c \cdot n \cdot 1/f + b'/2$$

beträgt, worin bedeuten:

A:   Abstand zwischen der Mittellinie der Sendeinrichtung und der Mittellinie der Empfangseinrichtung
b:   Breite der Sendeeinrichtung
b':  Breite der Empfangseinrichtung
c:   Schallgeschwindigkeit im Eisenbahnrad
n:   Zahl der Schwingungen pro Impulspaket
f:   Frequenz der Ultraschallschwingungen.

Auf diese Weise wird erreicht, daß die Empfangseinrichtung in der nächstmöglichen Position in Bezug auf die Sendeeinrichtung angeordnet wird, so daß gerade kein Signal, das aus der Überlagerung des links- und des rechtslaufenden Ultraschallimpulses entsteht, empfangen werden kann. Diese Minimierung des Abstandes ist in soweit sehr vorteilhaft, als dadurch die Länge der Strecke, innerhalb der keine Aussage über das evtl. Vorliegen von Rissen getroffen werden kann, sehr beschränkt ist. Die Minimierung des Abstandes zwischen Sende- und Empfangseinrichtung in o.gen. Weise bringt weiterhin den Vorteil mit sich, daß der beanspruchte Bauraum für den Ultraschallwandler klein gehalten werden kann.

Die Erfindung weiter ausgestaltend, ist es auch möglich, daß die Sendeeinrichtung und die Empfansspule in einem gemeinsamen Prüfkopf angeordnet sind. Somit haben die Sende- und die Empfangseinrichtung stets den gleichen Abstand voneinander, wodurch garantiert ist, daß Überlagerungen der rechts- und linkslaufenden Impulspakete nicht auftreten. Aufgrund der gemeinsamen Anordnung in einem Prüfkopf wird die Möglichkeit der synchronen Zuführung beider Spulen zu dem zu prüfenden Eisenbahnrad erheblich erleichtert und die Rüstzeit bei der Prüfung verkürzt.

Die Erfindung soll nun anhand der beigefügten Zeichnungen näher erläutert werden.
Es zeigen:

Fig. 1   eine schematische Darstellung einer Abwicklung der Radlauffläche mit Sende- und Empfangseinrichtung und entgegengesetzt umlaufenden Impulspaketen in verschiedenen Stadien während des Umlaufs und

Fig. 2   eine schematische Darstellung eines am Eisenbahnrad anliegenden Prüfkopfs mit Sende- und Empfangseinrichtung.

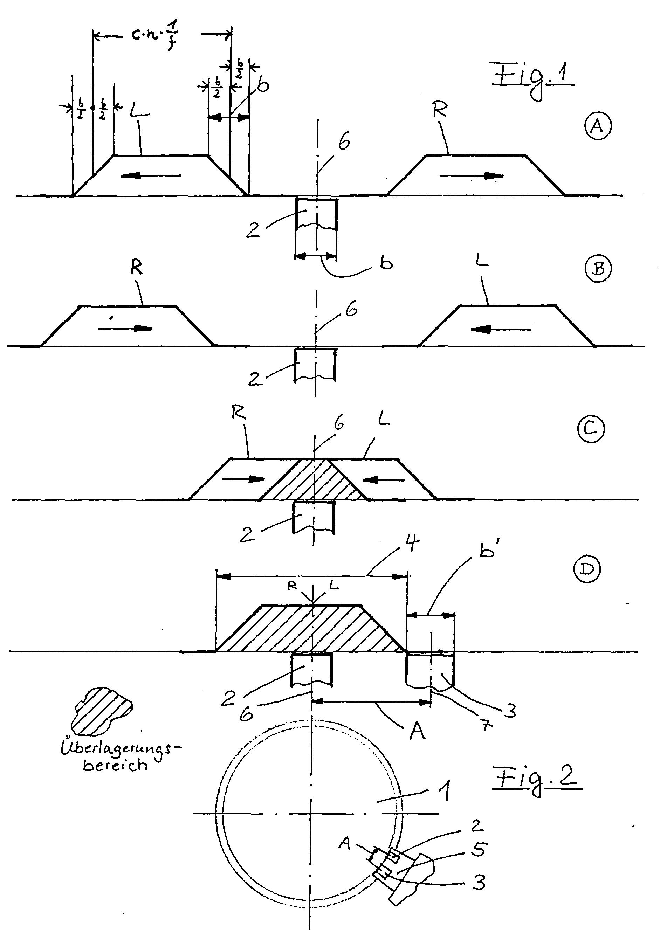

Aus Fig. 1a läßt sich entnehmen, wie die von der Sendeeinrichtung 2 erzeugten Impulspakete L und R sich in entgegengesetzter Richtung von der Sendeeinrichtung weg in Umfangsrichtung durch das Eisenbahnrad bewegen. Der Anschaulichkeit halber ist der Umfang des Eisenbahnrades als Abwicklung dargestellt. Aufgrund ihrer zeitgleichen Erzeugung und ihrer identischen Geschwindigkeit, nämlich der Schallgeschwindigkeit c im Eisenbahnrad, haben beide Impulspakte L und R stets denselben Abstand von der Mittellinie 6 der Sendeeinrichtung 2. Die Ultraschallimpulspakete L und R werden über die Breite b der Sendeeinrichtung erzeugt, wobei die Energie des Impulses über diese Länge b von Null auf ihren Endwert ansteigt. Über eine Länge von $c \cdot n \cdot 1/f - b$ wird die Energie dann konstant bleiben, wobei f für die Frequenz der Schallschwingungen im Eisenbahnrad steht und n die Anzahl der Schwingungen in einem Impulspaket bedeutet, die wiederum von der Zeit der Anregung abhängig ist. Nach diesem Abschnitt mit konstanter Energie folgt ein zweiter Bereich, in dem die Energie über eine Länge b wieder auf Null abfällt. Beide Impulspakete L und R sind von ihrer Form her deckungsgleich.

Fig. 1b zeigt nun, wie sich die beiden Impulspakete R und L nach ihrer (nicht gezeigten) Begegnung an der der Sendeeinrichtung diametral gegenüberliegenden Stelle des Rades nun wieder auf dem Rückweg zur Sendeeinrichtung sind. Die Seiten und die Richtungen bei ihrer Rückkehr zur Sendeeinrichtung 2 sind im Vergleich zur Stellung nach Fig. 1a vertauscht. Der Abstand der beiden Impulspakte R und L von der Mittellinie 6 der Sendeeinrichtung ist nach wie vor identisch, da beide Impulspakete aufgrund ihrer identischen Geschwindigkeit denselben Weg zurückgelegt haben.

In Fig. 1c ist eine Situation dargestellt, in der sich die beiden entgegengesetzt umlaufenden Impulspakte R und L bereits zu einem gewissen Teil überlagert haben. Dieser Bereich ist schraffiert dargestellt. Der schraffierte Überlagungsbereich liegt dabei symmetrisch zur Mittellinie 6 der Sendeeinrichtung.

In Fig. 1d ist nun diejenige Stellung abgebildet, bei der die beiden Impulspakete R und L exakt dekkungsgleich aufeinanderliegen, so wie dies zum Zeitpunkt ihrer Entstehung ebenfalls der Fall war. Die Länge des Bereichs 4 ergibt sich dabei aus der Summe aus der zweifachen Breite b der Sendeeinrichtung sowie der Länge c · n · 1/f des Bereichs, in dem die Energie des Impulspaketes konstant gehalten wird. Der Bereich 4 liegt symmetrisch zur Mittellinie 6 der Sendeeinrichtung 2 und kennzeichnet die maximale Ausdehnung des Bereichs der Überlagerung der entgegengesetzt umlaufenden Impulspakete L und R. Außerhalb dieses Bereichs 4 finden keinerlei Überlagerungen der gegenläufigen Impulspaket R und L statt, so daß dort eine zeitlich aufeinanderfolgende, getrennte Auswertung der Echosignale möglich ist. Der größte mögliche Abstand einer Stelle, an der noch Überlagerungen auftreten können, beträgt somit b + 1/2 · c · n · 1/f jeweils beidseitig von der Mittellinie 6 der Sendeeinrichtung aus gemessen.

In Fig. 1d ist weiterhin eine Empfangseinrichtung 3 abgebildet, die die Breite b' aufweist. Die Mittellinie 7 dieser Empfangseinrichtung 3 besitzt den Abstand A von der Mittellinie 6 der Sendeeinrichtung 2, der sich minimal als A = b + 1/2 c· n · 1/f + 1/2 b' bestimmt. Dies ist der minimale Abstand der Mittellinien, um die Empfangseinrichtung 3 mit ihrer gesamten Breite b' gerade so anzuordnen, daß sie nicht in den Bereich 4 der Überlagerungen der entgegengesetzten Impulspakte R und L fällt. Eine Minimierung dieses Abstandes A gemäß der eben genannten Formel ist deshalb vorteilhaft, weil somit der Bauraum für den Ultraschallwandler so klein wie möglich gehalten wird.

Aus Fig. 2 läßt sich entnehmen, wie ein Prüfkopf 5, in dem sowohl die Sendeeinrichtung 2 als auch die Empfangseinrichtung 3 angeordnet sind, an der Lauffläche eines auf Risse zu überprüfenden Rades 1 angeordnet ist. Bei minimiertem Abstand A zwischen Sende- und Empfangseinrichtung können die Abmessungen des Prüfkopfs klein gehalten werden, was dessen Handhabbarkeit und die Zugänglichkeit zum Rad bei eingeschränkten Platzverhältnissen erleichtert. Durch die Anordnung der Sende- und Empfangseinrichtung mit dauerhaft festem Abstand ist eine Nach- bzw. Ausjustierung der beiden Spulen zueinander nicht erforderlich und die für die Untersuchung erforderliche Rüstzeit wird minimiert.

Liste der verwendeten Bezugszeichen

| 1 | Eisenbahnrad |
|---|---|
| 2 | Sendeeinrichtung |
| 3 | Empfangseinrichtung |
| 4 | Bereich |
| 5 | Prüfkopf |
| 6 | Mittellinie |
| 7 | Mittellinie |
| L | linkslaufendes Impulspaket |
| R | rechtslaufendes Impulspaket |
| A | Abstand |

| b | Breite der Sendeeinrichtung |
|---|---|
| b' | Breite der Empfangseinrichtung |
| c | Schallgeschwindigkeit im Eisenbahnrad |
| f | Frequenz der Ultraschallschwingungen |
| n | Zahl der Schwingungen pro Impulspaket |

**Patentansprüche**

1. Ultraschallwandler zur Prüfung von Eisenbahnrädern auf Risse und dgl. mit mindestens einer nach einem elektrodynamischen Verfahren arbeitenden Sendeeinrichtung zur impulsweisen Aussendung von Ultraschallsignalen und mindestens einer Empfangseinrichtung zum Empfang der zugeordneten Echosignale, wobei die Übertragung der Ultraschallsignale auf das zu prüfende Eisenbahnrad und die Rückübertragung vom Eisenbahnrad auf die Empfangseinrichtung berührungslos oder berührend erfolgt, *dadurch gekennzeichnet, daß* die Sendeeinrichtung (2) und jede der Empfangseinrichtungen (3) starr miteinander verbunden und um einen Abstand (A) voneinander entfernt angeordnet sind, wobei der Abstand (A) zwischen der Mittellinie (6) der Sendeeinrichtung (2) und der Mittellinie (7) jeder Empfangseinrichtung (3) größer

$$b + b'/2$$

ist, worin bedeuten:

    b:     Breite der Sendeeinrichtung
    b':    Breite der Empfangseinrichtung.

2. Ultraschallwandler nach Anspruch 1, *dadurch gekennzeichnet, daß* der Abstand (A) zwischen der Mittellinie (6) der Sendeeinrichtung (2) und der Mittellinie (7) jeder Empfangseinrichtung (3) ungefähr

$$A = b + 1/2 \cdot c \cdot n \cdot 1/f + b'/2$$

beträgt, worin bedeuten:

    A:    Abstand zwischen der Mittellinie der Sendeeinrichtung und der Mittellinie jeder Empfangseinrichtung
    b:     Breite der Sendeeinrichtung
    b':    Breite der Empfangseinrichtung
    c:     Schallgeschwindigkeit im Eisenbahnrad
    n:    Zahl der Schwingungen pro Impulspaket
    f:     Frequenz der Ultraschallschwingungen.

3. Ultraschallwandler nach einem der Ansprüche 1 oder 2, *dadurch gekennzeichnet, daß* die Sendeeinrichtung (2) und jede Empfangseinrichtung (3) in einem gemeinsamen Prüfkopf (5) angeordnet sind.

4. Ultraschallwandler nach einem der vorhergehenden Ansprüche, *dadurch gekennzeichnet, daß* der Ultraschallwandler genau eine Sendeeinrichtung (2) genau eine Empfangseinrichtung (3) aufweist.

5. Verfahren zur Prüfung von Eisenbahnrädern auf Risse und dgl., bei welchem mindestens eine nach einem elektrodynamischen Verfahren arbeitende Sendeeinrichtung impulsweise Ultraschallsignale aussendet und mindestens eine Empfangseinrichtung zugeordnete Echosignale empfängt, wobei die Übertragung der Ultraschallsignale auf das zu prüfende Eisenbahnrad und die Rückübertragung vom Eisenbahnrad auf die Empfangseinrichtung berührungslos oder berührend erfolgt, *dadurch gekennzeichnet, daß* die Sendeeinrichtung (2) und jede der Empfangseinrichtungen (3) soweit in Umfangsrichtung des Eisenbahnrades (1) voneinander entfernt angeordnet sind, daß jede Empfangseinrichtung (3) außerhalb eines zur Mittellinie (6) der Sendeeinrichtung (2) symmetrischen Bereiches (4) der Überlagerung entgegengesetzt umlaufender Impulspakete (L, R) der Ultraschallsignale liegt.

6. Verfahren nach Anspruch 4, *dadurch gekennzeichnet, daß* der Abstand (A) zwischen der Mittellinie (6) der Sendeeinrichtung (2) und der Mittellinie (7) jeder Empfangseinrichtung (3) ungefähr

$$A = b + 1/2 \cdot c \cdot n \cdot 1/f + b'/2$$

beträgt, worin bedeuten:

A: Abstand zwischen der Mittellinie der Sendeeinrichtung und der Mittellinie jeder Empfangseinrichtung
b: Breite der Sendeeinrichtung
b': Breite der Empfangseinrichtung
c: Schallgeschwindigkeit im Eisenbahnrad
n: Zahl der Schwingungen pro Impulspaket
f: Frequenz der Ultraschallschwingungen.

7. Verfahren nach Anspruch 4 oder 5, *dadurch gekennzeichnet, daß* genau eine Sendeeinrichtung (2) und genau eine Empfangeinrichtung (3) vorgesehen ist.

**Claims**

1. An ultrasonic transducer to test train wheels for cracks, etc. with at least one transmitter that works according to an electrodynamic process to send ultrasonic signals in pulses, and with at least one receiver to receive the assigned echo signals, whereby the transmission of the ultrasonic signals to the tested train wheel and the back transmission from the train wheel to the receiver is done with or without contact, characterized in that the transmitter (2) and each of the receivers (3) are rigidly fixed to each other and are arranged with a gap (A) between them, and the gap (A) between the midline (6) of the transmitter (2) and the midline (7) of each receiver (3) is greater:

$$b + b'/2$$

where:

b: width of the transmitter
b': width of the receiver.

2. An ultrasonic transducer according to claim 1, characterized in that the gap (A) between the midline (6) of the transmitter (2) and the midline (7) of each receiver (3) is approximately:

$$A = b + ½ \cdot c \cdot n \cdot 1/f + b'/2$$

Where:

A: Gap between the midline of the transmitter and the midline of each receiver
b: Width of the transmitter
b': Width of the receiver
c: Speed of sound in the train wheel
n: Number of vibrations per burst
f: Frequency of the ultrasonic vibrations.

3. An ultrasonic transducer according to one of claims 1 or 2, characterized in that the transmitter (2) and each receiver (3) are in a common test head (5).

4. An ultrasonic transducer according to one of the prior claims, characterized in that the ultrasonic transducer has just one transmitter (2) and just one receiver (3).

5. A process to test train wheels for cracks, etc. where at least one transmitter transmits ultrasonic signals in pulses according to an electrodynamic process to send, and at least one receiver receives the assigned echo signals, whereby the transmission of the ultrasonic signals to the tested train wheel and the back transmission from the train wheel to the receiver is carried out with or without contact, characterized in that the transmitter (2) and each of the receivers (3) are spaced from each other around the perimeter of the train wheel (1) at a distance such that the receiver (3) lies outside of an area (4) (symmetrical with the midline (6) of the transmitter (2)) of overlap of oppositely revolving bursts (L,R) of ultrasonic signals.

**6.** A process according to claim 4, characterized in that the distance (A) between the midline (6) of the transmitter (2) and the midline (7) of each receiver (3) is approximately:

$$A = b + \tfrac{1}{2} \cdot c \cdot n \cdot 1/f + b'/2$$

Where:

A: Gap between the midline of the transmitter and the midline of each receiver
b: Width of the transmitter
b': Width of the receiver
c: Speed of sound in the train wheel
n: Number of vibrations per burst
f: Frequency of the ultrasonic vibrations.

**7.** A process according to claims 4 or 5, characterized in that there is just one transmitter (2) and just one receiver (3).

## Revendications

**1.** Transducteur d'essai ultrasonore pour tester la présence de fissures, etc., dans des roues de véhicules ferroviaires, comprenant au moins un dispositif émetteur fonctionnant selon un principe électrodynamique, pour l'émission pulsée de signaux ultrasonores, et au moins un dispositif récepteur pour recevoir les signaux d'écho correspondants, la transmission des signaux ultrasonores à la roue de véhicule ferroviaire à tester et la retransmission de la roue de véhicule ferroviaire au dispositif récepteur se faisant sans contact ou avec contact, caractérisé en ce que le dispositif émetteur (2) et chacun des dispositifs récepteurs (3) sont raccordés rigidement entre eux et sont espacés les uns des autres d'une distance (A), cette distance (A) séparant l'axe (6) du dispositif émetteur (2) et l'axe (7) de chaque dispositif récepteur (3) étant plus grande que

$$b + b'/2,$$

Formule dans laquelle:

b: est la largeur du dispositif émetteur et
b': est la largeur du dispositif récepteur.

**2.** Transducteur selon la revendication 1, caractérisé en ce que la distance (A) séparant l'axe (6) du dispositif émetteur (2) et l'axe (7) de chaque dispositif récepteur (3) correspond environ à

$$A = b + 1/2 \cdot c \cdot n \cdot 1/f + b'/2$$

Formule dans laquelle:

A: est la distance séparant l'axe du dispositif émetteur et l'axe de chaque dispositif récepteur
b: est la largeur du dispositif émetteur
b': est la largeur du dispositif récepteur
c: est la vitesse du son dans la roue de véhicule ferroviaire
n: est le nombre d'oscillations par train d'impulsions
f: est la fréquence des oscillations ultrasonores.

**3.** Transducteur selon l'une des revendications 1 ou 2, caractérisé en ce que le dispositif émetteur (2) et chaque dispositif récepteur (3) sont disposés dans un palpeur (5) commun.

**4.** Transducteur selon l'une des revendications précédentes, caractérisé en ce que le transducteur présente un dispositif émetteur (2), exactement, et un dispositif récepteur (3), exactement.

**5.** Procédé pour tester la présence de fissures, etc., dans des roues de véhicules ferroviaires, selon lequel un dispositif émetteur, au moins, fonctionnant selon un principe électrodynamique, émet par impulsions des signaux ultrasonores, et un dispositif récepteur, au moins, reçoit des signaux d'écho correspondants, la transmission des signaux ultrasonores à la roue de véhicule ferroviaire à tester et la retransmission de la roue de véhicule ferroviaire au dispositif récepteur se faisant sans contact ou avec contact, caractérisé en ce que le dispositif émetteur (2) et chacun des dispositifs récepteurs (3) sont espacés les uns des autres dans la direction périphérique de la roue de véhicule ferroviaire (1), de façon à ce que chaque dispositif récepteur (3) se situe à l'extérieur d'une zone (4) de superposition de trains d'impulsions (L, R) des signaux ultrasonores tournant en sens opposé, zone qui est symétrique par rapport à l'axe (6) du dispositif émetteur (2).

**6.** Procédé selon la revendication 4, caractérisé en ce que la distance (A) séparant l'axe (6) du dispositif émetteur (2) et l'axe (7) de chaque dispositif récepteur (3) correspond environ à

$$A = b + 1/2 \cdot c \cdot n \cdot 1/f + b'/2$$

Formule dans laquelle:

A: est la distance séparant l'axe du dispositif émetteur et l'axe de chaque dispositif récepteur

b:      est la largeur du dispositif émetteur

b':     est la largeur du dispositif récepteur

c:      est la vitesse du son dans la roue de véhicule ferroviaire

n:      est le nombre d'oscillations par train d'impulsions

f:      est la fréquence des oscillations ultrasonores.

7.  Procédé selon la revendication 4 ou 5, caractérisé en ce qu'on prévoit un dispositif émetteur (2), exactement, et un dispositif récepteur (3), exactement.

Fig. 1

(A)

(B)

(C)

(D)

Überlagerungsbereich

Fig. 2